# EUROPÄISCHE PATENTSCHRIFT

(11) **EP 2 225 180 B1**
(45) Veröffentlichungstag und Bekanntmachung des Hinweises auf die Patenterteilung: **05.09.2018**
(21) Anmeldenummer: 08862930.8
(22) Anmeldetag: 09.12.2008
(51) Int. Cl.: C03B 7/00, C08G 77/02, C08G 77/06, D01F 9/08

(54) **NICHT-TOXISCHES POLYSILOXAN-MATERIAL ZUR HERSTELLUNG VON BIOLOGISCH RESORBIERBAREN UND/ODER BIOAKTIVEN POLYSILOXAN-MATERIAL ENTHALTENDEN ARTIKELN**
NONTOXIC POLYSILOXANE MATERIAL FOR PRODUCING BIOLOGICALLY RESORBABLE AND/OR BIOACTIVE ARTICLES CONTAINING POLYSILOXANE MATERIAL
MATÉRIAU À BASE DE POLYSILOXANE NON TOXIQUE POUR LA FABRICATION D'ARTICLES BIOLOGIQUEMENT RÉSORBABLES ET/OU BIOACTIFS CONTENANT DU MATÉRIAU À BASE DE POLYSILOXANE

(30) Priorität: 19.12.2007 DE 102007061874
(43) Veröffentlichungstag der Anmeldung: 08.09.2010
(73) Patentinhaber: Bayer Innovation GmbH, 51373 Leverkusen (DE)
(72) Erfinder: GLAUBITT, Walther, 97279 Würzburg (DE); EHRIG, Anja, 51373 Leverkusen (DE)
(74) Vertreter: Kutzenberger Wolff & Partner
(86) Internationale Anmeldenummer: PCT/EP2008/010412
(87) Internationale Veröffentlichungsnummer: WO 2009/077104

(56) Entgegenhaltungen:
- WO-A-00/50349
- WO-A-2008/086970
- WO-A-2008/148384

## Beschreibung

Die Erfindung betriff ein nicht-toxisches Polysiloxan-Material (PSN-Material), ggf. ein gereiftes Polysiloxan-Material (rPSN-Material), das bevorzugterweise als eines von mehreren verschiedenen Polysiloxan-Materialien (PSN-Materialien) ausgebildet ist. Ein solches rPSN (r steht für reif, gereift) lässt sich erfindungsgemäß beispielsweise zu biologisch resorbierbaren und/oder bioaktiven Fasern als eines der PSN-Materialien verspinnen und dann zu Vliesen als andere PSN-Materialien weiter verarbeiten. Die vorliegende Erfindung betrifft weiterhin Verfahren zu Herstellung des ggf. gereiften PSN-Materials, der biologisch resorbierbaren und/oder bioaktiven PSN-Materialien und Verwendung für diese Materialien.

Es gibt vielfältige Bestrebungen, biologisch resorbierbare Materialien für verschiedene Anwendungen in der Humanmedizin und der Medizintechnik, aber auch in anderen technischen Bereichen wie der Filtertechnik, der Biotechnologie oder der Dämmstoffindustrie zu entwickeln. In diesen Bereichen werden zudem stetig steigende Anforderungen, insbesondere an die biologische Aktivität und die toxikologischen Eigenschaften der Materialien, gestellt.

Resorbierbare Si-Polymere sind im Stand der Technik bekannt. In der DE 196 09 551 C1 sind biologisch degradier- und resorbierhare Faserstrukturen beschrieben. Diese Fasern können in einem Sol-Gel-Prozess dadurch erhalten werden, dass man aus einer Spinnmasse Fasern zieht und diese gegebenenfalls trocknet. Die Spinnmasse enthält eine oder mehrere partiell oder vollständig hydrolytisch kondensierte Verbindungen des Siliziums, die sich durch hydrolytische Kondensation ableiten von Monomeren der allgemeinen Formel SiX₄. Die Fasern haben den Nachteil. dass sie bei einer Degradation direkt nach dem Spinnprozess keine optimalen Ergebnisse in Cytotoxizitätstests zeigen und teilweise sogar als cytotoxisch eingestuft werden müssen, Eine solche Toxizität ist gerade im Einsatz in der Humanmedizin, in der Medizintechnik, in der Filtertechnik, in der Biotechnologie oder Dämmstoffindustrie, insbesondere im Bereich der Wundheilung oder der Filtration von Zellen aus Körperflüssigkeiten, gänzlich unerwünscht.

Das Verfahren zur Herstellung der Fasern nach der DE 196 09 551 C1 hat darüber hinaus den Nachteil, dass die resultierende Mischung nach dem Entfernen des Lösungsmittels einen Feststoff enthält und daher einer Filtration unterworfen werden muss. Andere flüssige Si-Polymere, die ggf. toxisch sind, lassen sieh mit einer Filtration überhaupt nicht entfernen. Darüber hinaus geht unter anderem durch die Bildung der festen Phase und durch den zwingenden Filtrationsschritt ein großer Anteil des spinnbaren Sols verloren. Nach dem Verfahren der DE 196 09 551 C1 kann auch während der Reifung die Bildung eines nicht unbeträchtlichen Anteils einer gelartigen Phase aus hochkondensierten Si-Verbindungen erfolgen. Dies reduziert nochmals den Anteil an spinnbarer Sol-Masse.

Im Zusammenhang mit Silicafasern kann ferner auf WO 00/50349 verwiesen werden.

Aufgabe der vorliegenden Erfindung ist es, ein nicht-toxisches, biologisch resorbierbares und/oder bioaktives Material, dieses Material enthaltende Materialien und ein Verfahren zur Herstellung eines derartigen nicht-toxischen Materials zur Verfügung zu stellen.

Bioaktivität bedeutet erfindungsgemäß eine positive Interaktion zwischen Material bzw. Materialien einerseits und Gewebe (z.B. Wundgewebe) andererseits mit nachfolgender Differenzierung des Gewebes und als Folge davon Bindung oder Adhäsion von Gewebe entlang der Grenzfläche Material bzw. Materialien/(Empfänger-)Gewebe.

Die Aufgabe wird durch ein Sol bzw. eine kolloidale Lösung gemäß Anspruch 1 gelöst, die erfindungsgemäß auch als PSN-Material bezeichnet wird. Eine derartige kolloidale Lösung wird dadurch erhalten, dass
(a) eine erste Hydrolyse-Kondensationsreaktion (HKR) von höchstens einem Rest X von einer oder von mehreren verschiedenen Si -Verbindungen der Formel (I):

   SiX₄ (I)

   in der die Reste X gleich oder verschieden sind und Hydroxy, Wasserstoff, Halogen, Amino, Alkoxy, Acyloxy, Alkylcarbonyl und/oder Alkoxycarbonyl bedeuten und sich von Alkyl-Resten ableiten, die gegebenenfalls substituierte geradkettige, verzweigte oder cyclische Reste mit 1 bis 20 Kohlenstoff-Atomen, bevorzugt mit 1 bis 10 Kohlenstoff-Atomen, darstellen und durch Sauerstoff- oder Schwefelatome oder durch Amino-Gruppen unterbrochen sein können, sauer katalysiert bei einem anfänglichen pH-Wert von 0 bis ≤ 7, in Gegenwart eines wasserlöslichen Lösungsmittels, ausgewählt aus Ethanol und einem Ethanol-Wasser-Gemisch, über einen Zeitraum von 8 bis 24 Stunden bei einer Temperatur von 20°C bis 60°C durchgeführt wird;
(b) eine zweite HKR des in Schritt (a) erhaltenen Materials bei gleichzeitigem Entfernen des Lösungsmittels durch Eindampfen in einem geschlossenen Apparat, in dem eine Durchmischung des Materials erfolgt und das Eindampfen im Vakuum bei einem variablen Unterdruck zwischen 1 bis < 600 mbar und durch kontinuierliche Zufuhr eines chemisch inerten Schleppgasstroms erfolgt, wobei zumindest einer der Verfahrensparameter Druck, Schleppgasstrom und/oder Temperatur zeitlich variabel angepasst wird und die Temperatur der Eindampfung bei einer konstanten Temperatur zwischen 60 und 90°C liegt und der Schritt bis zu einer Viskosität von 0,5 bis 2 Pa·s (bei 4°C und 10 1/s) durchgeführt wird;
(c) dieses PSN-Material in einem geschlossenen Apparat in einem Zeitraum von 0,2 bis 5 Stunden auf diejenige Temperatur abgekühlt wird, bei der Schritt (d) durchgeführt wird; und
(d) das aus (c) erhaltene PSN-Material durch eine dritte HKR in ein gereiftes Polysiloxan-Material (rPSN)-Material überführt wird, wobei die Reifung bei einer Temperatur von -20°C bis 10°C erfolgt.

Es bleibt hervorzuheben, dass das erfindungsgemäße (nicht-toxische, biologisch resorbierbare und/oder bioaktive) PSN- bzw. rPSN-Matieral hergestellt werden kann, ohne dass das Herstellungsverfahren einen oder mehrere Filtrationsschritte umfassen würde oder gar müsste. Dies ist ein wesentlicher Unterschied zu dem Verfahren, das aus der DE 1 96 09 551 C1 bekannt ist. Gegebenfalls schließt sich an Schritt (d) eine vierte HKR als einer der folgenden Schritte (e1) bis (e4) an, mittels derer aus dem in Schritt (d) erhaltenen rPSN-Material eines der PSN-Materialien wie Faser- (e1), Pulver (e2), Monolith (e3) oder Beschichtung (e4) erzeugt werden kann. Dementsprechend beinhalten diese Schritte die folgenden Maßnahmen:
(e1) das PSN-Material zu biologisch resorbierbaren und/oder bioaktiven Fasern zu verspinnen;
(e2) das Material aus Schritt (d) dadurch zu einem Pulver zu verarbeiten, dass das erhaltene rPSN-Material einer Trocknung, insbesondere einer Lyophilisation, unterworfen und das getrocknete PSN-Material zu einem Pulver zerkleinert (gemahlen) wird;
(e3) das rPSN-Material aus Schritt (d) in eine Form zu gießen und zu trocknen;
(e4) das rPSN-Material aus Schritt (d) auf einen zu beschichtenden Körper aufzutragen oder diesen in das rPSN-Material einzutauchen.

Es ist besonders bevorzugt, wenn das rPSN-Material/die rPSN-Materialien bei Anwendung einen pH-Wert von 5 bis 7, insbesondere von ≥ 6. aufweist bzw. aufweisen, damit es/sie eine akzeptable (physiologische) Verträglichkeit besitzt/en. Unter pH 5 ist das Material schon aufgrund des sauren Charakters unverträglich. Da in Schritt (b) bis auf einen geringen Wassergehalt eingedampft wird lässt sich die Säurestärke im nahezu wasserfreien System nicht als ein bestimmter pH-Wert definieren, Vielmehr sollte die optionale Abpufferung (also Zusatz eines geeigneten Puffers oder einer Lauge) oder Verringerung der Säure-Stärke (z. B. im Fall der Salpetersäure durch Austreiben/Verdampfen von NO bzw. NO₂ in (b) so erfolgen, dass das letztlich nach (e) erhaltene rPSN-Material bzw. die daraus geformten PSN-Materialien beim Wässern einen pH-Wert von 5 bis 7, insbesondere von ≥ 6, aufweist/aufweisen.

Um dies zu erreichen, ist es bevorzugt, die Säure-Stärke in Schritt (b) zu verringern bzw. die Wirkung der Säure abzupuffern, Erfolgt dies jedoch nicht bereits in Schritt (b), oder erfolgt dies nicht bis auf das bevorzugte Niveau, kann es auch nachfolgend in Schritt (c) oder (e) oder auch erst unmittelbar vor Applikation der PSN-Materialien (z.B. auf der Haut bzw. Wunde) erfolgen. Die Einstellung der richtigen Säure-Stärke oder -Wirkung in Schritt (b) ist erfindungsgemäß aber eindeutig bevorzugt.

Die Verringerung der Säure-Wirkung in einem der Schritte (b), (c) oder (e) oder während der Wässerung der PSN-Materialien kann insbesondere mittels Tris (Tris(hydroxymethyl)-aminomethan) in Form der freien Base oder eines Salzes (z.B. Tris-Acetat, Tris-Phosphat) erfolgen.

Nachfolgend werden die einzelnen Schritte der vorstehenden Reaktionen näher diskutiert.

### Schritt (a)

In Schritt a) wird ein Rest X von einer oder von mehreren verschiedenen Si-Verbindungen der Formel (I):

SiX₄ (I)

in der die Reste X gleich oder verschieden sind und Hydroxy, Wasserstoff, Halogen, Amino, Alkoxy, Acyloxy, Alkylcarbonyl und/oder Alkoxycarbonyl bedeuten und sich von Alkyl-Resten ableiten, die gegebenenfalls substituierte geradkettige, verzweigte oder cyclische Reste mit 1 bis 20 Kohlenstoff-Atomen, bevorzugt mit 1 bis 10 Kohlenstoff-Atomen, darstellen und durch Sauerstoff- oder Schwefelatome oder durch Amino-Gruppen unterbrochen sein können, eingesetzt.

In einer bevorzugten erfindungsgemäßen Ausführungsfonn steht X in der Formel (I) für einen gegebenenfalls substituierten geradkettigen, verzweigten und/oder cyclischen Alkoxyrest mit 1 bis 20 Kohlenstoff-Atomen, bevorzugt mit 1 bis 10 Kohlenstoff-Atomen. Besonders bevorzugt steht X in der Formel (I) für einen gegebenenfalls substituierten geradkettigen und/oder verzweigten C₁- C₅ Alkoxyrest. Weiter besonders bevorzugt sind substituierte, vorzugsweise aber unsubstituierte geradkettige und/oder verzweigte C₂ - C₃ Alkoxyreste, wie beispielsweise Ethoxy, N-Propoxy und/oder Isopropoxy.

Erfindungsgemäß ganz besonders bevorzugt wird Tetraethoxysilan (TEOS) als einzige Si-Verbindung der Formel (I) in die erfindungsgemäße (erste) HKR eingesetzt.

Der anfängliche pH von 0 bis ≤ 7. vorzugsweise von 2-3, 5, wird z.B. mit verdünnter Salpetersäure (z.B. mit 1 N, vorzugsweise mit 0,01 N HNO₃) eingestellt. Geeignet sind aber grundsätzlich alle sauren Gemische und Lösungen, die geeignet sind, lokal NO bzw. NO₂ zu erzeugen. Dies können z.B. auch saure Gemische und Lösungen sein, die in physiologischer Umgebung mit molekularem Sauerstoff enzymatisch (mittels einer Nitroxid-Synthase, NOS) Stickstoffmonoxid (NO) erzeugen, das wiederum vom Körper schnell zu NO₂ umgesetzt wird oder es können auch Organische Nitrate bzw. Nitratester (so genannte NO-Donatoren) sein z.B. Ethylnitrat, die NO mit Hilfe einer organischen Nitratreduktase bilden. Für diese enzymatische Freisetzung von NO werden Thiolgruppen (Cystein) benötigt.

Neben der verdünnten Salpetersäure ist erfindungsgemäß deshalb auch eine wässrige oder alkoholische (besonders bevorzugt: eine wässrig verdünnte ethanolische) Lösung einer physiologisch verträglichen Säure (z.B. Zitronen-. Bernstein-, Wein-, Essig- oder Ascorbinsäure) und mindestens einer essentiellen (z.B. L-Arginin, besonders bevorzugt; L-Valin, L-Leucin, L-lsoleucin, L-Phenylalanin, L-Thyroxin, L-Methionin, L-Lycin oder L-Tryptophan) oder nicht-essentiellen Aminosäure (z.B. L-Glutamin, L-Glutaminsäure, L-Asparagin, L-Asparaginsäure, L-Cystein, L-Glycin, L-Alanin. L-Prolin, L-Histidin, L-Tyrosin) als Substrat der NOS geeignet, den pH auf den gewünschten Wert im schwach bis mittelstark sauren Bereich einzustellen.

Wird zur Einstellung des pH verdünnte Salpetersäure (z.B. 0.01 N) verwendet, wird diese vorzugsweise eingesetzt in einem molaren Verhältnis Si-Verbindung(en) der Formel (I)/Salpetersäure von 110:1 bis 90:1, besonders bevorzugterweise von 100: 1, Die Salpetersäure wird günstigerweise so eingesetzt, dass das molare Verhältnis Si-Verbindung der Formel (I) (z.B. TEOS)/HNO₃) etwa 100:1 beträgt.

Das wasserlösliche Lösungsmittel, das in Schritt (a) erfindungsgemäß Verwendung findet, ist Ethanol bzw. ein Ethanol-Wasser-Gemisch, das die Aufgabe hat, die Si-Verbindung(en) der Formel (I) zu lösen bzw. wenigstens zu emulgieren. Ist die Si-Verbindung der Formel (I) TEOS, löst/emulgiert Wasser die Si-Verbindung der Formel (I) nicht und wird deshalb vorzugsweise mit EtOH als Lösungsvermittler abgemischt. Die bevorzugte Menge an EtOH liegt bei 1 bis 1,5 Mol/Mol TEOS und beträgt gemäß einer besonders bevorzugten Ausführungsfbrm 1,26 Mol/Mol TEOS.

Ein ganz besonders bevorzugter Reaktionsansatz wird erfindungsgemäß entsprechend der nachfolgend genannten Masse- bzw. Molverhältnisse durchgeführt, durchgeführt. In dem Reaktionsgefäß wird 1 Mol TEOS vorgelegt, wozu dann 1,26 Mol EtOH gegeben werden. Dieses Gemisch wird gerührt, so dass der EtOH das TEOS löst. Separat werden 27,81 g 1 N HNO₃ (entspricht 1.75 g HNO₃) mit 60,38 g H₂O verdünnt (die Gesamtmasse der verdünnten Salpetersäure ist also 88,19 g davon entfallen 86.44 g auf H₂O, entsprechend 4,8 Mol, und 1,75 g auf HNO₃), entsprechend O,028 Mol; das Mol-Verhältnis H₂O/HNO₃ beträgt 4,8/0.028 = 172). Von der verdünnten Salpetersäure werden dann 33,07 g zu der ethanolischen TEOS-Lösung gegeben (so dass 1,8 Mol H₂O und 0.01 Mol HNO₃ pro 1 Mol TEOS eingesetzt werden).

Die erste HKR läuft exotherm ab. Die erste HKR bedeutet erfindungsgemäß, erläutert am Beispiel von TEOS, das je eine EtO-Gruppe in je einem Molekül TEOS hydrolysiert und die resultierende OH-Gruppe unter Dimerisierung und Wasser-Abspaltung unter ständigem Rühren kondensiert. Das heißt, man vereinigt die beiden Lösungen (z.B. TEOS in EtOH und verd. Salpetersäure) bei Raumtemperatur (RT), wobei die Temperatur während der Umsetzung von 2 SiX₄ (also z.B. von 2 TEOS) via Hydrolyse und Kondensation von je einem EtO-Rest zu X₃Si-O-SiX₃ (z.B. (EtO)₃-Si-O-Si-(EtO)₃) bei adiabater Reaktionsführung um etwa 40°C ansteigt. Die erste HKR wird bei einer Temperatur von 20°C bis 60°C durchgeführt. Erfindungsgemäß wird die Hydrolyse von mehr als einer EtO-Gruppe pro TEOS-Molekül vermieden. Es gilt für die Temperatur natürlich die übliche Beziehung in der Chemie, dass eine tiefere Temperatur längere Reaktionszeiten - und umgekehrt - erfordert. Erfindungsgemäß wird diese erste HKR über einen Zeitraum von 8-24 Stunden (h) durchgeführt.

Erfindungsgemäß wird diese erste HKR über einen Zeitraum von 8-24 Stunden (h) durchgeführt.

Die erste HKR wird vorzugsweise diskontinuierlich in einem Rührwerksbehälter durchgeführt. Die Si-Verbindung der Formel (I) (z.B. TEOS) und das Solvens (z.B. Ethanol) werden vorzugsweise vorgelegt. Anschließend erfolgt die zügige Zugabe der Säure, vorzugsweise in Form von 0,01 N HNO₃(z.B. 0.01 Mol HNO₃ pro Mol TEOS). Aufgrund der Säure-Stärke in dem Reaktionsgemisch läuft die erste HKR schnell ab, und der Inhalt des Behälters erwärmt sich um etwa 30 °C bis 40 °C, ehe die Temperatur noch während der Reaktionszeit (also in Schritt (a)) zu sinken beginnt (in Folge einer Abkühlung auf die Umgebungstemperatur bzw. Heizmitteltemperatur).

### Schritt (b)

Durch eine zweite HKR des in Schritt (a) erhaltenen Materials in einem geschlossenen Apparat, in dem eine Durchmischung möglich ist (z.B. Rotationsverdampfer, Rührkessel) bei gleichzeitiger Entfernung des wasserlöslichen Lösungsmittels (z.B. Wasser, Ethanol) durch Eindampfen im Vakuum bei einem bei einem variablen Unterdruck zwischen 1 bis < 600 mbar, und unter kontinuierlicher Zufuhr eines chemisch inerten Schleppgasstroms (zur Partialdruckerniedrigung der verdampfenden Komponenten) erfolgt, wobei zumindest einer der Verfahrensparameter Druck, Schleppgasstrom und/oder Temperatur zeitlich variabel angepasst wird und das Eindampfen bei einer Reaktionstemperatur von 60 °C bis 90 °C, bevorzugt bei etwa 60-70 °C und vorzugsweise unter schonender Durchmischung des Reaktionssystems bis zu einer Viskosität des Gemisches auf 0,5 bis 2 Pa·s (bei 4°C und 10 1/s), vorzugsweise auf ca. 1 Pa·s (Messung bei 4°C, Scherrate 10 1/s) erfolgt.

Durch die fortschreitende Reaktion/Polymerisation (am Viskositätsanstieg erkennbar) verschiebt sich das Phasengleichgewicht, so dass der entsprechende Gleichgewichtsdruck des Lösungsmittels in der Dampfphase immer niedriger wird. Sinkt der Gleichgewichtsdruck auf den Gesamtdruck in der Gasphase ab, hört die Verdampfung auf. Um weiter Lösungsmittel zu verdampfen, muss daher der Druck abgesenkt, der Schleppgasstrom variabel angepasst und/oder die Temperatur erhöht werden. In einer bevorzugten Ausführungsform der Erfindung erfolgt das Eindampfen in Schritt b) bei einer konstanten Temperatur und zeitlich variablem Druck.

Schritt (b) sollte unbedingt unter Wasserausschluss ablaufen, damit keine weitere Hydrolyse erfolgen kann. Erfindungsgemäße Temperaturen oberhalb von 60 °C begünstigen bei der sonst im Restlösungsmittel deutlich ansteigenden Konzentration der HNO₃ eine reduktive Umsetzung der HNO₃ zu NO. Dieses sehr leichtflüchtige Gas (Normalsiedepunkt etwa -150°C) wird nach Entweichen aus der flüssigen Phase bei Luftkontakt zum leicht siedenden NO₂ (SP etwa 21°C) oxidiert, das mit dem Abluft- bzw. Gasstrom aus dem System entfernt wird. Auf diesem Weg wird die Säurekonzentration im PSN-Material beschränkt bzw. reduziert.

"Schleppgasstrom" bezeichnet erfindungsgemäß einen Gasstrom, der dem Gasvolumen über der Flüssigphase des Reaktionssystem zugeführt wird. Zur Wahrung der isobaren Verhältnisse im Reaktionsgefäß muss dadurch ein gasförmiger Volumenstrom abgeführt werden, der sowohl aus dem "Schleppgas" als auch aus der / den zu verdampfenden Komponente(n) besteht. Die resultierende Partialdruckerniedrigung, also die Verringerung des Anteils der zu verdampfenden Komponente bzw. des Komponentengemisches im Gasraum, erhöht die treibende Kraft zur Verdampfung des Lösungsmittel an der Flüssigkeitsoberfläche.

In einer besonders bevorzugten Ausführungsform wird der "Schleppgasstrom" mittels eines geeignet im Gasraum des Apparates angeordneten Gasverteilers derart verteilt, dass ein ausreichender Schleppgasaustausch knapp oberhalb der Flüssigkeitsoberfläche gewährleistet wird, ohne jedoch die Flüssigkeitsoberfläche direkt konvektiv anzuströmen. Letzteres kann im Extremfall zu einer lokalen Vergelung führen, was unerwünscht ist. Gasverteiler mittels der diese Ausführungsform umgesetzt werden kann, sind dem Fachmann bekannt.

In einer bevorzugten Ausführungsform der Erfindung wird als chemisch inerter Schleppgasstrom Stickstoff und/oder Luft zur Partialdruckerniedrigung eingesetzt.

Erfindungsgemäß wird das wasserlösliche Lösungsmittel mittels einer Kombination aus Vakuum und Schleppgasstrom entfernt. Der Gesamtdruck und Schleppgasstrom kann bei dieser Ausführungsform der Erfindung unabhängig voneinander konstant oder zeitlich variabel angepasst werden. In dieser Ausführungsform der Erfindung wird aber auch zumindest einer der Verfahrensparameter Druck, Schleppgasstrom und/oder Temperatur zeitlich variabel angepasst. Dadurch wird es möglich z. B. integral eine bestimmte Reaktionszeit bei einem gewünschten Eindampfgrad zu erreichen und/oder die Eindampfrate an die Reaktionskinetik anzupassen.

In einer bevorzugten Ausführungsform der Erfindung wird das Eindampfen in Schritt b) bei einer konstanten Temperatur und zeitlich variablem Druck erfolgen, wobei der Druck bis zum Ende der zweiten HKR, ausgehend von Normaldruck bzw. leichtem Unterdruck, auf < 600 mbar, vorzugsweise < 500 mbar, besonders bevorzugt < 100 mbar abgesenkt wird.

Bei der erfindungsgemäßen Kombinationsfahrweise (Vakuum mit Schleppgasstrom) beträgt
der variable Unterdruck zwischen 1 bis <600 mbar. Es wird besonders bevorzugt, Schritt (b), den Schritt des sog. Reaktiveindampfens, so lange ablaufen zu lassen. bis die Viskosität auf ca. 1 Pa · s angestiegen ist und somit die zur Durchführung des darauf folgenden Schrittes (c) nötigen Soleigenschaften gegeben sind. Bei zu niedriger Viskosität (frühzeitiger Abbruch) ist die Kinetik in Schritt (c) zu langsam. Bei zu hoher Viskosität bilden sich unerwünschte Gele, die eine Weiterverarbeitung beeinträchtigen.

Bevorzugterweise wird Schritt (b) durch Abkühlen auf Temperaturen unterhalb 10 °C und vorzugsweise durch Einstellen von Normaldruck (etwa 1013 mbar) beendet.

Das Reaktiveindampfen erfolgt bei (Partial-)druck- und Temperaturverhältnissen, die einerseits zum weitgehenden Einengen des Sols durch Verdampfung von Lösungsmittel geeignet sind, andererseits bei Verwendung von HNO₃ eine Abnahme der Säurestärke begünstigen, und weiterhin aus reaktionskinetischer Sicht die für die nachfolgenden Prozesschritte benötigten (Vor-)strukturen schaffen. Temperaturen um 70°C sind bevorzugt.

Wird in Schritt: (a) verdünnte Salpetersäure als Säure verwendet, erfolgt die mögliche und bevorzugte Verringerung der Säure-Stärke in Schritt (b) dadurch, dass sich die Säure während des Reaktiveindampfens zu NO und Wasser bzw. in Anwesenheit von Sauerstoff zu NO₂ und Wasser zersetzt. N als NO bzw. NO₂ wird dann aber nur zum (allergrößten) Teil ausgetrieben, ein (sehr geringer) Teil verbleibt in dem Sol/der kolloidalen Lösung. Wird aber das System organische Säure/Arginin an Stelle von Salpetersäure verwendet, erfolgt die Erhöhung des pH bzw. die Verringerung der Säure-Stärke, falls erwünscht, z.B. mittels Tris-Lösungcn (soweit sich die Säure. z.B. Essigsäure, nicht austreiben läßt).

Es wurde nun überraschenderweise festgestellt, dass bei Einhaltung der Bedingungen, wie sie vorstehend für die Schritte (a) und (b) beschrieben worden sind und nach dem Entfernen des Lösungsmittels in Schritt (b) eine kolloidale Lösung erhalten wird, die vor der Reifung in Schritt (d) keiner Filtration mehr bedarf d.h, keine störenden Feststoffe enthält.

### Schritt (c)

Dieser Schritt, der ein Abkühlvorgang ist, wird sinnvollerweise dadurch gekennzeichnet, dass die in Schritt (b) erhaltene kolloidale Lösung zügig, d.h. innerhalb von 0,2 bis 5 Stunden, bevorzugt innerhalb einer halben Stunde, in einen geschlossenen,
vorzugsweise in einen gasdiffusionsdichten Behälter überführt und auf diejenige Temperatur abgekühlt wird, bei der Schritt (d) durchgeführt wird.

Dementsprechend liegen die Temperaturen auf die abgekühlt wird, bei -20 °C bis 10°C, bevorzugt bei 2°C bis 4°C, besonders bevorzugt bei 4°C. Der Eintritt von Feuchtigkeit, z.B. als Luftfeuchtigkeit oder am Behälter anhaftende Feuchtigkeit, ist unbedingt zu vermeiden. Gegebenenfalls erfolgt in diesem Schritt auch die Anpassung des Materials derart, dass der pH-Wert der am Körper anzuwendenden späteren Materialien bei pH 5 bis 7 liegt, bevorzugt ist pH > 6.

### Schritt (d)

Die kinetische kontrollierte Reifung ist Bestandteil des erfindungsgemäßen Verfahrens und ermöglicht überhaupt erst die Verarbeitbarkeit in Form z.B. der Spinnbarkeit oder auch der Beschichtbarkeit des nach Schritt (c) erhaltenen Reaktionsgemisches (PSN-Materials). In diesem Schritt (d) erfolgt eine dritte HKR, wobei sich die Viskosität des Reaktionsgemisches aufgrund der fortschreitenden Polymerisation weiter erhöht.

Schritt (d) erfolgt erfindungsgemäß in geschlossenen vorzugsweise gasdiffusionsdichten Gefäßen, z.B. in so genannten Reifebechern, vorzugsweise in den Gefäßen, die bereits für Schritt (c) verwendet wurden. Der Eintritt von Feuchtigkeit oder anderen Gasen, hier sei auch CO₂ erwähnt, ist unbedingt zu vermeiden. Die bevorzugte Durchführung von Schritt (d) erfolgt erfindungsgemäß bei einer Temperatur von -20°C bis 10°C in einem Zeitraum von 1 Tag bis zu 8 Wochen, bevorzugt bei 2°C bis 4°C und in einem Zeitraum von 3 bis 18 Tagen. Besonders bevorzugt wird die Reifung über einen Zeitraum von 10 bis 14 Tagen bei 4 °C durchgeführt, insbesondere durch erschütterungsfreies Lagern des Reaktionsgemisches in geschlossenen, vorzugsweise gasdiffusionsdichten Gefäßen, Die Reifung kann bei jeder Temperatur im Bereich von - 20°C bis 10°C erfolgen.

Der Fachmann erkennt, dass Temperatur und Reaktionszeit zwei voneinander abhängige Größen sind, die aufeinander abgestimmt werden, vorzugsweise so, dass das in Schritt (d) erhaltene rPSN-Material eine dynamische Viskosität annimmt, die es für die Durchführung eines der Schritte (e1) bis (e4) geeignet macht und vorbereitet. Soll das Material in einem Schritt (e1) zur Faser versponnen werden, sollte die dynamische Viskosität am Ende von (d) etwa 30 bis 100 Pa · s, bevorzugt 45 bis 60 Pa · s (Scherrate 10s⁻¹ bei 4°C) mit einem Verlustfaktor (bei 4°C, 10 l/s, 1% Deformation) von 2 bis 5 bevorzugt von 2,5 bis 3,5 betragen (der Verlustfaktor ist der Quotient aus viskosem zu elastischem Anteil der dynamischen Viskosität). Soll das Material dagegen in einem Schritt (e2) zum Pulver verarbeitet werden, beträgt die dynamische Viskosität am Ende von (d) etwa 60 Pa · s (Scherrate 10 s⁻¹ bei 4°C). Im Fall der Verarbeitung des Materials zu einem Monolith (in einem Schritt (e3)), beträgt die dynamische Viskosität am Ende von (d) vorzugsweise größer gleich 70 Pa · s (Scherrate 10s¹ bei 4°C). Und wenn das Material in einem Schritt (e4) zur Beschichtung von Körpern oder Oberflächen verwendet werden soll, liegt die dynamische Viskosität je nach gewünschter Schichtdicke bei kleiner gleich 10 Pa · s (Scherrate 10s⁻¹ bei 4°C).

Ein zu hoher Verlustfaktor bedeutet eine zu hohe Elastizität des Materials, die z.B. der Ausbildung eines stabilen Fadens bei der Verspinnung entgegensteht (Vergelung, Reißen des Fadens). Bei zu niedriger Verlustfaktor ist das Material so fließfähig, dass eine stabile Fadenbildung nicht möglich ist (Tropfen).

Das Endprodukt der Reifung im Reifebecher ist ein Sol (das rPSN-Material) mit bestimmten rheologischen Eigenschaften, u. a. einer Strukturviskosität. Strukturviskosität ist die Eigenschaft eines Fluids, bei hohen Scherkräften eine niedrigere Viskosität zu zeigen; je stärker die Scherung ist, die auf das Fluid wirkt, desto weniger viskos (zähflüssig) ist es. Die Abnahme der Viskosität entsteht durch die Krafteinwirkung auf die Polymere im Sol, die dafür sorgt, dass sich diese ausrichten und deshalb besser aneinander vorbeigleiten können; weiteres hierzu, insbesondere zur Größe und Form der Strukturen, die die Spinnfähigkeit ausmachen, siehe Sakka in Sol-Gel Technology for Thin Films, Fibers, Preforms, Electronics and Specialty Shapes,, ed. L. C. Klein, Neyes, Park Ridge, N, Y., 1988, Seite 140 und Abbildung 2.7.).

Vorteilhafterweise wird erfindungsgemäß also die konkurrierende Ausbildung eines dreidimensionalen polymeren Gel-Netzwerkes (weitestgehend) unterdrückt, das Endprodukt des erfindungsgemäßen Verfahrens nach Schritt (d) ist vorteilhafterweise also ein hydrophobes, Ethoxy-Gruppen aufweisendes Sol ohne Gel-Anteil, das (weitestgehend) frei von Wasser ist.

Da die kinetisch kontrollierte Reifung, also Schritt (d), unterhalb von -20°C nur noch sehr langsam abläuft, kann das PSN-Material nach Schritt (c) bei Temperaturen unterhalb -60°C "eingefroren" werden. Das ist insofern durchaus eine bevorzugte Variante, als sich das PSN-Material (vor Schritt (d) so genauso lagern und transportieren lässt wie das rPSN-Material nach Schritt (d).

### Schritt (e1)

Der Spinnprozess zur Verarbeitung des Sols zur Faser wird unter üblichen Bedingungen durchgeführt, wie zum Beispiel in DE 196 09 551 C1 und DE 10 2004 063 599 A1 beschrieben. Hierbei wird dass rPSN z. B. über einen Druckbehälter durch eine Düsenplatte mit bis zu 250 Einzeldüsen ausgeblasen (Druck im Behälter 1-100 bar. vorteilhafterweise 20 bar).

Das aus der (kalten) Düse austretende Sol erfährt beim Durchfallen durch den (wannen) Spinnschacht eine weitere (vierte) HKR, die dafür verantwortlich ist, dass das aus der Düse austretende Material via (molekularer) Quervernetzung zu einer (stabilen) Faser reagiert. Der Spinnschacht hat üblicherweise eine Länge von 1-5 m vorteilhafterweise 2 m. Das Klima im Spinnschacht wird bzgl. Temperatur und Feuchtigkeit kontrolliert eingestellt (bevorzugt sind Temperaturen zwischen 20°C und 30°C und -5 bis 10°C Taupunkt), ggf. kann hier auch eine Atmosphäreneinstellung mit weiteren Reaktanden (z.B. Ethylnitrat) erfolgen.

Die Fasern werden nach dem Durchfallen durch den Spinnschacht z. B. auf einen Changiertisch abgelegt. Die Maschenweite der so entstehenden Fasergelege wird u. a. über die Changiergeschwindigkeiten eingestellt. Diese liegt bei einigen cm/s. Durch eine zwei-Achsenbewegung entsteht so ein engmaschiges Fasergelege (Vlies), bei dem, bezogen auf TEOS als Si enthaltende Ausgangsverbindung, i.d. R. noch über 30 % der Ethoxy-Gruppen vorhanden sind.

Die in Schritt (e1) erfindungsgemäß hergestellten Fasern weisen aufgrund der noch vorhandenen Ethoxy-Gruppen eine gewisse Hydrophobizität auf. Sie sind darüber hinaus (weitestgehend) frei von Lösungsmittel (Wasser, Ethanol)..
In der Tat besteht eine bevorzugte Ausführungsform der Erfindung darin, die Fasern bzw. Vliese nach Schritt (e1) bzw. das Pulver, den Monolith und die beschichteten Körper/Oberflächen nach Schritt: (e2), (e3) und (e4) herzustellen und diese erfindungsgemäßen Ausführungsformen zu lagern, zu transportieren und zu vertreiben.

Wird in Schritt (a) verdünnte Salpetersäure als Säure verwendet, erfolgt die mögliche und bevorzugte Verringerung der Säure-Stärke in Schritt (e1), (e2), (e3) und (e4) dadurch, dass der verbliebene, eingeschlossene Teil der HNO3 als NO oder NO₂ durch Ablüften an Luft bei bevorzugterweise 30°C entweicht. Wird aber das System organische Säure/Arginin an Stelle von Salpetersäure verwendet, erfolgt die Erhöhung des pH bzw. die Verringerung der Säure-Stärke, falls erwünscht, z.B. mittels Tris-Lösungen (soweit sich die Säure, z.B Essigsäure, nicht austreiben läßt) kurz vor der Applikation durch spülen in einer wässrigen Tris-Lösung.

### Schritt (e2)

Vor oder auch während der Trocknung kann das rPSN-Material aus Schritt (d) (das auf Grund seiner Bioaktivität als ein Wirkstoff betrachtet werden kann) mit beliebigen (weiteren) Wirkstoffen, beispielsweise pharmazeutisch wirksamen Substanzen versetzt oder mit einer weiteren, vierten HKR kovalent gebunden werden (nachfolgend ist bei Verwendung des Begriffes "Wirkstoff" jedoch regelmäßig nicht das rPSN-Material aus Schritt (d) gemeint, sondern der weitere Wirkstoff). Vorzugsweise soll das unter Erzeugung eines homogenen Gemisches erfolgen. Insbesondere im Fall der Beimischung von temperaturempfindlichen Wirkstoffen wird das Gemisch aus PSN-Material und Wirkstoff(en) nach der vierten HKR einer schonenden Trocknung, z.B. einer Sprüh- oder Gefriertrocknung unterworfen. Ist der Wirkstoff nicht temperaturempfindlich oder wird ein solcher gar nicht zugesetzt, kann die Trocknung auch bei (deutlich) erhöhten Temperaturen bewirkt werden. Dabei bildet sich vorzugsweise eine bioresorbierbare und/oder bioaktive Matrix um den Wirkstoff. Diese Matrix ist insbesondere auch für die Einkapselung von flüssigen Wirkstoffen geeignet Flüssigkeiten können langzeitstabil in der Matrix eingeschlossen und kontrolliert wieder freigegeben werden. Die Einkapselung ermöglicht die mechanische und chemische Stabilisierung der Wirkstoffe, die verbesserte Handhabbarkeit solcher flüssigen Wirkstoffe und Arzneimittel und hilft, eine ungesteuerte Verflüchtigung der Wirkstoffe zu vermeiden. Es können selbstverständlich weitere, der jeweiligen Anwendung angepasste Substanzen und/oder Hilfsstoffe in der endgültigen Formulierung (Pulver) vorhanden sein. Anwendungen ohne zusätzlichen Wirkstoff sind z.B. Zuschlagstoffe für Hautcremes etc., wie sie z.B. in htlp://www.photolagen.com beschrieben sind.

Das Pulver kann ein Mikropulver und/oder ein Nanopulver sein. Die Partikel eines erfindungsgemäßen Mikropulvers haben vorzugsweise eine Größe (einen mittleren Durchmesser) von 0,01 µm bis 100 µm, insbesondere 0,1 µm bis 20 µm. Die Nanopulver-Partikel haben in der Regel eine Größe (einen mittleren Durchmesser) von ≤ 100 nm.

### Schritt (e3)

In einer weiteren Ausgestaltung kann das rPSN-Material aus Schritt (d) (wiederum vor oder während der Trocknung) mit einem (weiteren) Wirkstoff beispielsweise einer pharmazeutisch wirksamen Substanz versetzt oder mittels einer vierten HKR kovalent gebunden werden, Anschließend erfolgt dann, unabhängig von der Gegenwart des (weiteren) Wirkstoffs, das Gießen des rPSN-Materials in eine Form. Nach der Trocknung kann auf diese Weise ein Monolith erhalten werden. Solche Monolithe können in Form von massiven Implantaten als Wirkstoff Zulieferungs- System (Drug Delivery System) beispielsweise subkutan eingesetzt werden. Sie können beispielsweise als Depot für Contraceptiva eingesetzt werden und über einen längeren Zeitraum den Wirkstoff freigeben. Solche erfindungsgemäßen Implantate weisen eine gute biologische Verträglichkeit auf. Die Monolithe können vorzugsweise einen Durchmesser von ≥ 0,5 mm aufweisen. Alternativ können die Monolithe auch zu Pulver zerkleinert und gemahlen werden.

### Schritt (e4)

Das gereifte Material aus Schritt (d) kann aber auch zu einer Beschichtung verarbeitet werden. Dazu wird der zu beschichtende Körper durch Tauchen in das rPSN-Material, durch Begießen mit dem rPSN-Material oder durch Aufschleudern oder Sprayen des rPSN-Materials beschichtet. Bevorzugt als Beschichtungen sind solche auf Dragees oder Kapseln, wozu gepresste pulverförmige Arzneimittel-Gemische mit einer biologisch resorbierbaren und/oder bioaktiven Beschichtung aus dem rPSN-Material versehen werden. Hierdurch kann die Freisetzung von (weiteren) Wirkstoffen (z.B. über die Schichtdicke und/oder die Schichtabfolge) innerhalb der Formulierung kontrolliert und/oder gesteuert werden. Eine derartige Beschichtung läßt sich aber auch auf Körperteil-Implantate aufbringen, wodurch die (biologische) Verträglichkeit der Implantate verbessert wird, z.B. Abstoßungsreaktionen abgemildert oder verhindert werden.

Nach einer weiteren Ausgestaltung der Erfindung können hochviskose Sole, insbesondere Hydrogele, durch das erfindungsgemäße rPSN-Material ergänzt oder ersetzt werden. Die hochviskosen Sole und die Hydrogele werden in der Medizin und in der Kosmetik als Wirkstoff bzw. Arzneimittelträger verwendet. Generell werden Hydrogele vielfach in der Versorgung von großflächigen Wunden (Wundbehandlung und Wundheilung) eingesetzt. Vorteilhafterweise kann durch den Zusatz des rPSN-Materials die biologische Verträglichkeit und damit die Wundheilung verbessert werden. Die erfindungsgemäßen Hydrogele können insoweit vorteilhaft als biologisch resorbierbare und/oder bioaktive Produkte in der Medizin, insbesondere Humanmedizin oder Medizintechnik eingesetzt werden.

### Weiterverarbeitung bzw. Verwendung der Faser

Die Fasern als Endprodukte eines der erfindungsgemäß bevorzugten Verfahren umfassend die Schritte (a) bis (d), und (e1) können als Fasern aber auch als Vliese verwendet werden. Diese PSN-Malerialien weisen, wie auch das PSN- und rPSN-Material, ein(e) hervorragende(s) biologische(s) Resorptionsvermögen und/oder Bioaktivität auf.

Vor Verwendung der PSN-Materialien, vorzugsweise unmittelbar vor ihrer Verwendung, z.B. als biologisch resorbierbare und/oder bioaktive Materialien in der Humanmedizin oder Medizintechnik (z.B. für die Wundbehandlung, Wundheilung, als chirurgisches Nahtmaterial oder als Verstärkungsfasern; siehe auch nächster Absatz unten) werden die PSN-Materialien (Faser, Pulver, Monolith, Beschichtungslösung) vorzugsweise gewässert besonders bevorzugt unter leichtem äußeren Druck gewässert. Durch das Wässern werden die restlichen noch vorhandenen Ethoxy-Gruppen vollständig hydrolysiert, die Materialien damit hydrophiler gemacht, Wie oben bereits erwähnt, kann diese Wässerung unter pHerhöhenden Bedingungen (z.B. in einem Phosphatpuffer H₂PO₄⁻/HPO₄²⁻ erfolgen, insbesondere wenn die Anhebung des pH-Wertes nicht bereits in einem vorherigen Schritt erfolgte. Dabei läuft die sechste und letzte HKR ab, während der die noch verbliebenen nicht-hydrolysierten Ethoxy-Gruppen aus den PSN-Materialien entfernt werden.

Ein weiterer Vorteil ist, dass das erfindungsgemäß erzeugte PSN- bzw. rPSN-Material und die daraus bestehenden Materialien gegenüber den Fasern und Fasermaterialien, die nach dem Verfahren der DE 196 09 551 C1 erhalten wurden, in Cytotoxizitätstests deutlich verbesserte Werte aufweisen. Diese Verbesserung wurde in Tests in Gegenwart von L929-Mausfibroplasten nachgewiesen. Die Materialien, die erfindungsgemäß aus den Schritten (e1) bis (e4) erhalten werden, zeichnen sich daher durch eine besonders gute biologische Verträglichkeit aus.

Die erfindungsgemäß hergestellten Fasern oder Vliese können insoweit vorteilhaft als biologisch resorbierbare und/oder bioaktive Materialien in der Humanmedizin, der Medizintechnik, der Filtertechnik. der Biotechnologie oder der Dämmstoffindustrie eingesetzt werden. Insbesondere können die erfindungsgemäß hergestellten Materialien vorteilhaft im Bereich der Wundbehandlung und Wundheilung verwendet werden. Fasem können beispielsweise als chirurgisches Nahtmaterial oder als Verstärkungsfasem eingesetzt werden. Vliese können besonders vorteilhaft bei der Versorgung von oberflächlichen Wunden, bei der Filtration von Körperflüssigkeiten (z.B. Blut) oder im Bereich der Bioreaktoren als Anzuchthilfe verwendet werden.

Die erfindungsgemäßen PSN-Materialien aus (e1), (e2), (e3) und (e4), die mit einer biologisch aktiven Substanz beladen sein können. das heißt. neben dem bioaktiven Si-Polymer einen weiteren Wirkstoff enthalten, können diesen an den eigentlichen Wirkort transportieren bzw. die Freisetzung des Wirkstoffs am Wirkort beeinflussen. Diese Materialien werden im Folgenden als Wirkstoffträger (drug delivery system) bezeichnet. Die Verwendung des erfindungsgemäßen gereiften PSN-Materials und der erfindungsgemäßen PSN-Materialien hat den Vorteil. dass beide vielseitig verarbeitet, eingesetzt und mit verschiedenen (weiteren) Wirkstoffen kombiniert. werden können. Besonders bevorzugt ist es, wenn das erfindungsgemäße rPSN-Material hierbei keine Reaktionsprodukte mit dem (weiteren) Wirkstoff bildet. Die erfindungsgemäßen PSN-Materialien sind biologisch resorbierbar und/oder bioaktiv und weisen verbesserte Cytotoxizitätswerte auf, was zu einer verbesserten biologischen Verträglichkeit der Materialien beiträgt, die gerade im Bereich der Medizin und Medizintechnik notwendig ist.

Die Erfindung soll mit folgendem Beispiel näher erläutert werden, ohne hierauf beschränkt zu sein.

Alle angegebenen Viskositäten wurden mit einem Viskosimeter MCR 300 der Firma Physika bei einer Scherrate von 10 s⁻¹ bei 4°C gemessen.

### Beispiele

### Beispiel 1: Referenzbeispiel, nicht Teil der beanspruchten Erfindung.

Biologisch resorbierbares und/oder bioaktives rPSN-Material (Sol) und dessen Verarbeitung zu Fasern und Vliesen.

Als Edukt für die Hydrolyse-Kondensationsreaktion wurden 2,7 Mol TEOS (Tetraethoxysilan) (562,4 g) in einem Reaktionsgefäß vorgelegt. 3,4 (2.7 x 1,26) Mol EtOH (156.8 g) als Lösungsmittel wurden zugegeben. Das Gemisch wird gerührt. Separat wurde 1 N HNO₃ (27,81 g) mit H₂O (60,38 g) verdünnt und dem TEOS-Ethanol-Gemisch hinzugefügt. Das resultierende Reaktionsgemisch enthält 1.8 Mol H₂O und 0,01 Mol HNO₃ pro Mol TEOS. Das Gemisch wurde 18 Stunden gerührt.

Das nach Schritt (a) erhaltene Gemisch wurde nachfolgend durch Eindampfen im Rotationsverdampfer (Schritt b) bei 70°C unter stufenweises Anlegen eines Vakuums von 500-200 mbar unter langsamem Rühren (20 U/min) nahezu Wasser- und Ethanol-frei gemacht. Durch die hohe Temperatur wurde die HNO₃ in der reduzierten Form NO₂ stark reduziert . Das Sol wies eine Viskosität von etwa 1 Pa · s (Scherrate von 10 s⁻¹ bei 4°C) auf, die Säure-Stärke nahm stark ab.

Die Lösung wurde in Schritt (c) in einem geschlossenen Polypropylen-Becher (Reifebecher) innerhalb von 30 Minuten auf 4°C abgekühlt und bei dieser Temperatur in Schritt (d) im Reifebecher einer Reifung von 8 Tagen unterworfen. Es wurde eine homogene einphasige Sol Masse mit einer Viskosität von ca. 40 Pa · s (Scherrale 10 s-¹ bei 4°C) erhalten. Das Sol lag ohne erkennbaren festen Phasenanteil vor.

Das Sol konnte im Schritt (c1) zu Fasern versponnen werden. Es wird auch als Spinnmasse bzw. rPSN-Material bezeichnet. Die Herstellung der Fasern erfolgte in einer üblichen Spinnanlage. Dazu wurde die Spinnmasse in einen auf -15°C gekühlten Druckzylinder gefüllt, der mit einem Druck von 20 bar beaufschlagt wurde. Die daraus resultierende Kraft presste die Spinnmasse durch die Düsen. Die austretenden Spinnfäden wiesen je nach lokaler Temperatur und somit Viskosität der Spinnmasse einen Durchmesser von 30 bis 70 µm auf. Das fließfähige, honigartige Material fiel durch sein Eigengewicht in einen unter dem Druckzylinder befindlichen Spinnschacht mit 2 m Länge und reagierte dort mit der Luftfeuchtigkeit, wobei die Fließfähigkeit der Fäden abnahm. Im Spinnschacht wurden Temperatur und Feuchtigkeit kontrolliert eingestellt. Die Temperatur lag bei 25°C und die Luftfeuchte bei 35 %. Beim Auftreffen der Fäden auf den Changiertisch behielten diese nahezu ihre zylindrische Form bei, waren jedoch noch so fließfähig, dass sie an ihren Berührungsflächen miteinander zu Fasegelegen (Vliesen) verklebten.

Die Vliese wurden anschließend in einem Trockenschrank bei ca. 30°C gelüftet und dadurch der Säuregehalt weiter reduziert, Die Säure-Stärke wurde dabei auf ein physiologisch verträgliches Maß reduziert.

Das in Beispiel 1 hergestellte Vlies wurde einem Cytotoxizitäts-Test nach ISO 10993-5 (1999); EN 30993-5 (1994) unterzogen. Die gemessene Cytotoxizität im Vergleich zu den für die Kontrollen ermittelten Werten ergab, dass das hergestellte Vlies keine cytotoxischen Eigenschaften aufwies.

### Vergleichsbeispiel

Die Edukte TEOS (Tetraethoxysilan), EtOH, H₂O und HNO₃ wurden im molaren Verhältnis von 1: 1,26 ; X ; 0.01 (mit X - 1.6. 1.7. 1.8. 1.9 und 2.0) vermischt und 5 Stunden bei Raumtemperatur kräftig gerührt. Die resultierende Lösung wurde in einem offenen Gefäßen in ein auf 70°C temperiertes Wasserbad gehängt, worin sie bis zu einem definierten Gewichtsverlust verblieben. Anschließend wurde das Reaktionsgemisch gekühlt und über ein Edelstahlnetz mit einer Maschenweite von 1 mm x 1mm filtriert. Das Filtrat wurde in einem verschlossenen Gefäß bei einer Temperatur von 3°C einer Reifezeit von 6 Stunden bis 6 Monaten., in Abhängigkeil von Gewichtsverlust, ausgesetzt. Die resultierende Spinnmasse war sehr homogen und einige Zeit stabil und spinnbar. Die Herstellung der Fasern erfolgte an einer Trockenspinnanlage. Dazu wurde die Spinnmasse in einen auf -15°C gekühlten Spinnkopf gefüllt, bei einem Druck von 10 bis 15 bar zunächst durch ein Edclslahlnctz mit einer Maschenweite von 80 x 80 µm und dann durch eine Düse mit einem Durchmesser von 100 µm gepresst. Der resultierende Endlosladen wurde nach einer Trockenstrecke von 1 m auf einen rotierenden Zylinder gewickelt. Die resultierenden Fasern zeigen in Abhängigkeit vom Ansatz, d.h. der zugegebenen Wassermenge, runde, ovale oder knotenförmige Querschnittsformen mit Durchmessern zwischen 5 µm und 30 µm, Die Querschnittsflächen liegen zwischen 100 µm² bis 400 µm². Die Faseroberfläche ist glatt und zeigt in keinem Fall ein Wellenprofil.

Zugfestigkeitsmessungen der Fasern ergaben Werte von 100 MPa bis 800 MPa. Vom Fasermaterial angefertigte IR-Spektren zeigen eine: Si-OH-Bande bei 950 cm⁻¹ und C-H-Signale bei 3000 cm⁻¹. Es liegen also teilhydrolysierte und teilkondensierte Ethoxy-Silanol-Fasern vor. Nach ca. 2 Monaten Lagerung bei Raumtemperatur sind im IR-Spektrum keine C-H-Schwingungsbandcn mehr zu erkennen. Die Fasern haben sich in teilkondensierte Silanol-Fasem umgewandelt, welche über einen Zeitraum von mehreren Monaten stabil sind.

Mit den so hergestellten Fasern wurden Cytotoxizitätsmessungen durchgeführt. Bei dem hieraus erzeugten Fasermuterial wurden im Cytotoxizitätstest nach ISO 10993-5 (1999); EN 30993-5 (1994) cytotoxische Wirkungen festgestellt.

Auch konnte hierbei nur 50 % des gesamten Reaktionsansatzes versponnen werden.

## Patentansprüche

1. Ein biologisch resorbierbares, nicht-toxisches Polysiloxan (PSN)-Material, dadurch zu erhalten, dass
(a) eine erste Hydrolyse-Kondensationsreaktion (HKR) von höchstens einem Rest X von einer oder von mehreren verschiedenen Si -Verbindungen der Formel (I):
SiX₄ (I)
in der die Reste X gleich oder verschieden sind und Hydroxy, Wasserstoff, Halogen, Amino, Alkoxy, Acyloxy, Alkylcarbonyl und/oder Alkoxycarbonyl bedeuten und sich von Alkyl-Resten ableiten, die gegebenenfalls substituierte geradkettige, verzweigte oder cyclische Reste mit 1 bis 20 Kohlenstoff-Atomen, bevorzugt mit 1 bis 10 Kohlenstoff-Atomen, darstellen und durch Sauerstoff- oder Schwefelatome oder durch Amino-Gruppen unterbrochen sein können, sauer katalysiert bei einem anfänglichen pH-Wert von 0 bis ≤ 7, in Gegenwart eines wasserlöslichen Lösungsmittels, ausgewählt aus Ethanol und einem Ethanol-Wasser-Gemisch, über einen Zeitraum von 8 bis 24 Stunden bei einer Temperatur von 20°C bis 60°C durchgeführt wird;
(b) eine zweite HKR des in Schritt (a) erhaltenen Materials bei gleichzeitigem Entfernen des Lösungsmittels durch Eindampfen in einem geschlossenen Apparat, in dem eine Durchmischung des Materials erfolgt und das Eindampfen im Vakuum bei einem variablen Unterdruck zwischen 1 bis < 600 mbar und durch kontinuierliche Zufuhr eines chemisch inerten Schleppgasstroms erfolgt, wobei zumindest einer der Verfahrensparameter Druck, Schleppgasstrom und/oder Temperatur zeitlich variabel angepasst wird und die Temperatur der Eindampfung bei einer konstanten Temperatur zwischen 60 und 90°C liegt und der Schritt bis zu einer Viskosität von 0,5 bis 2 Pa·s (bei 4°C und 10 1/s) durchgeführt wird;
(c) dieses PSN-Material in einem geschlossenen Apparat in einem Zeitraum von 0,2 bis 5 Stunden auf diejenige Temperatur abgekühlt wird, bei der Schritt (d) durchgeführt wird; und
(d) das aus (c) erhaltene PSN-Material durch eine dritte HKR in ein gereiftes Polysiloxan-Material (rPSN)-Material überführt wird, wobei die Reifung bei einer Temperatur von -20°C bis 10°C erfolgt.

2. Material nach Anspruch 1, **dadurch gekennzeichnet, dass** der pH von 0 bis ≤ 7 in Schritt (a) mit verdünnter Salpetersäure oder mit einem sauren Gemisch oder Lösung aus (i) einer physiologisch verträglichen Säure wie Zitronen-, Bernstein-, Wein-, Essig oder Ascorbinsäure und (ii) einem Substrat der Nitroxid-Synthase (NOS) wie Arginin eingestellt wird.

3. Material nach Anspruch 1 oder 2, **dadurch gekennzeichnet, dass** verdünnte Salpetersäure in einem molaren Verhältnis Si-Verbindung(en) der Formel (I) zu Salpetersäure von 90: 1 bis 1 10: 1 , bevorzugt von 100: 1 eingesetzt wird.

4. Material nach einem der vorhergehenden Ansprüche, **dadurch gekennzeichnet, dass** das Sol in Schritt (c) auf -20°C bis +10°C abgekühlt und vorzugsweise auf Normaldruck eingestellt wird.

5. Material nach einem der vorhergehenden Ansprüche, **dadurch gekennzeichnet, dass** das gereifte PSN-Material in einem Schritt (c₁) zu biologisch resorbierbaren und/oder bioaktiven Fasern versponnen wird.

6. Material nach einem der vorhergehenden Ansprüche, **dadurch gekennzeichnet, dass** das gereifte PSN-Material in einem weiteren Schritt (e₂), (e₃) oder (e₄) zu einem/r biologisch resorbierbaren und/oder bioaktiven Pulver; Monolith oder Beschichtung verarbeitet wird.

7. Material nach einem der vorhergehenden Ansprüche, **dadurch gekennzeichnet, dass** Schritt (d) bis zu einer Viskosität (bei einer Scherrate von 10 s⁻¹ bei 4°C) des Materials von 30 bis 100 Pa·s, bevorzugt 45 bis 60 Pa·s (Scherrate 10 s⁻¹ bei 4°C) mit einem Verlustfaktor (bei 4°C, 10 1/s, 1 % Deformation) von 2 bis 5, bevorzugt von 2,5 bis 3,5 durchgeführt wird.

## Claims

1. A biologically resorbable, nontoxic polysiloxane (PSN) material to be obtained by
(a) carrying out a first hydrolysis-condensation reaction (HCR) of at most one radical X of one or more different Si compounds of the formula (I):
SiX₄ (I)
in which the radicals X are identical or different and are hydroxy, hydrogen, halogen, amino, alkoxy, acyloxy, alkylcarbonyl and/or alkoxycarbonyl and are derived from alkyl radicals which are optionally substituted straight-chain, branched or cyclic radicals having 1 to 20 carbon atoms, preferably having 1 to 10 carbon atoms, and may be interrupted by oxygen or sulphur atoms or by amino groups, acid catalysed at an initial pH of 0 to ≤ 7, in the presence of a water-soluble solvent, selected from ethanol and an ethanol/water mixture, over a period of from 8 to 24 hours at a temperature of from 20°C to 60°C;
(b) carrying out a second HCR of the material obtained in step (a) while at the same time removing the solvent by evaporation in a closed apparatus, in which thorough mixing of the material takes place and the evaporation takes place in vacuo at a variable subatmospheric pressure between 1 and < 600 mbar and by continuously introducing a chemically inert entrainment gas stream, where at least one of the process parameters pressure, entrainment gas stream and/or temperature is time-variably adjusted and the temperature of the evaporation is at a constant temperature between 60 and -90°C and the step is carried out up to a viscosity of from 0.5 to 2 Pa·s (at 4°C and 10 l/s);
(c) cooling this PSN material in a closed apparatus in a period of from 0.2 to 5 hours to that temperature at which step (d) is carried out; and
(d) converting the PSN material obtained from (c) into a ripened polysiloxane material (rPSN) material via a third HCR, wherein the ripening takes place a temperature of from -20°C to 10°C.

2. Material according to Claim 1, **characterized in that** the pH from 0 to ≤ 7 in step (a) is established with dilute nitric acid or with an acidic mixture or solution of (i) a physiologically compatible acid such as citric acid, succinic acid, tartaric acid, acetic acid or ascorbic acid and (ii) a substrate of nitroxide synthase (NOS) such as arginines.

3. Material according to Claim 1 or 2, **characterized in that** dilute nitric acid is used in a molar ratio of Si compound (s) of the formula (I) to nitric acid from 90:1 to 110:1, preferably 100:1.

4. Material according to one of the preceding claims, **characterized in that** the sol in step (c) is cooled down to -20°C to +10°C and is preferably adjusted to atmospheric pressure.

5. Material according to one of the preceding claims, **characterized in that** the ripened PSN material is spun in a step (c₁) into bioabsorbable and/or bioactive fibres.

6. Material according to one of the preceding claims, **characterized in that** the ripened PSN material is processed in a further step (e₂), (e₃) or (e₄₎ to give a bioabsorbable and/or bioactive powder, monolith or coating.

7. Material according to one of the preceding claims, **characterized in that** step (d) is carried out up to a viscosity (at a shear rate of 10 s⁻¹ at 4°C) of the material of from 30 to 100 Pa·s, preferably 45 to 60 Pa·s (shear rate 10 s⁻¹ at 4°C) with a loss factor (at 4°C, 10 l/s, 15 deformation) of from 2 to 5, preferably from 2.5 to 3.5.

## Revendications

1. Matériau en polysiloxane non toxique biorésorbable (PSN), obtenu en ce que
(a) une première réaction d'hydrolyse-condensation (HKR) d'au plus un radical X d'un ou de plusieurs composés de Si de formule (I) différents :
SiX₄ (I)
dans laquelle les radicaux X sont identiques ou différents, et signifient hydroxy, hydrogène, halogène, amino, alcoxy, acyloxy, alkylcarbonyle et/ou alcoxycarbonyle et dérivent de radicaux alkyle qui sont des radicaux linéaires, ramifiés ou cycliques éventuellement substitués de 1 à 20 atomes de carbone, de préférence de 1 à 10 atomes de carbone, et peuvent être interrompus par des atomes d'oxygène ou de soufre ou par des groupes amino, est réalisée sous catalyse acide à un pH initial de 0 à ≤ 7, en présence d'un solvant soluble dans l'eau, choisi parmi l'éthanol et un mélange éthanol-eau, pendant une durée de 8 à 24 heures à une température de 20 °C à 60 °C ;
(b) une deuxième HKR du matériau obtenu à l'étape (a) a lieu avec élimination simultanée du solvant par évaporation dans un appareil fermé dans lequel un mélange du matériau a lieu et l'évaporation a lieu sous vide à une sous-pression variable comprise entre 1 et < 600 mbar et par apport continu d'un courant de gaz d'entraînement chimiquement inerte, au moins un des paramètres de procédé pression, débit du gaz d'entraînement et/ou température étant adapté de manière variable dans le temps et la température de l'évaporation se situant à une température constante comprise entre 60 et 90 °C, et l'étape étant réalisée jusqu'à une viscosité de 0,5 à 2 Pa·s (à 4 °C et 10 1/s) ;
(c) ce matériau PSN est refroidi dans un appareil fermé en une durée de 0,2 à 5 heures à la température à laquelle l'étape (d) est réalisée ; et
(d) le matériau PSN obtenu en (c) est transformé par une troisième HKR en un matériau de polysiloxane mûr (rPSN), le murissement ayant lieu à une température de -20 °C à 10 °C.

2. Matériau selon la revendication 1, **caractérisé en ce que** le pH de 0 à ≤ 7 à l'étape (a) est ajusté avec de l'acide nitrique dilué ou avec un mélange ou une solution acide de (i) un acide physiologiquement compatible tel que l'acide citrique, succinique, tartrique, acétique ou ascorbique et (ii) un substrat de la nitroxyde-synthase (NOS) tel que l'arginine.

3. Matériau selon la revendication 1 ou 2, **caractérisé en ce que** de l'acide nitrique dilué est utilisé en un rapport molaire entre le ou les composés de Si de formule (I) et l'acide nitrique de 90:1 à 110:1, de préférence de 100:1.

4. Matériau selon l'une quelconque des revendications précédentes, **caractérisé en ce que** le sol à l'étape (c) est refroidi à une température de -20 °C à +10 °C et de préférence ajusté à la pression normale.

5. Matériau selon l'une quelconque des revendications précédentes, **caractérisé en ce que** le matériau PSN mûr est filé lors d'une étape (c₁) en fibres biorésorbables et/ou bioactives.

6. Matériau selon l'une quelconque des revendications précédentes, **caractérisé en ce que** le matériau PSN mûr est transformé lors d'une étape (e₂), (e₃) ou (e₄) supplémentaire en une poudre, un monolithe ou un revêtement biorésorbable et/ou bioactif.

7. Matériau selon l'une quelconque des revendications précédentes, **caractérisé en ce que** l'étape (d) est réalisée jusqu'à une viscosité (à un taux de cisaillement de 10 s⁻¹ à 4 °C) du matériau de 30 à 100 Pa·s, de préférence de 45 à 60 Pa·s (taux de cisaillement de 10 s⁻¹ à 4 °C) avec un facteur de perte (à 4 °C, 10 l/s, 1 % de déformation) de 2 à 5, de préférence de 2,5 à 3,5.
